(19) Europäisches Patentamt
European Patent Office
Office européen des brevets

(11) **EP 4 136 365 B1**

(12) **EUROPÄISCHE PATENTSCHRIFT**

(45) Veröffentlichungstag und Bekanntmachung des Hinweises auf die Patenterteilung:
**07.02.2024  Patentblatt 2024/06**

(21) Anmeldenummer: **22709654.2**

(22) Anmeldetag: **21.02.2022**

(51) Internationale Patentklassifikation (IPC):
**F16H 1/32** (2006.01)

(52) Gemeinsame Patentklassifikation (CPC):
**F16H 1/32;** F16H 2001/324; F16H 2001/328

(86) Internationale Anmeldenummer:
**PCT/EP2022/054279**

(87) Internationale Veröffentlichungsnummer:
**WO 2022/179987 (01.09.2022 Gazette 2022/35)**

(54) **GETRIEBE**

TRANSMISSION

BOÎTE DE VITESSES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.02.2021  EP 21159552**

(43) Veröffentlichungstag der Anmeldung:
**22.02.2023  Patentblatt 2023/08**

(73) Patentinhaber: **Spinea s.r.o.**
**080 01 Haniska (SK)**

(72) Erfinder: **DZVONIK, Ján**
**08005 Presov (SK)**

(74) Vertreter: **Jeck, Jonathan**
**JECK, FLECK & Partner mbB**
**Klingengasse 2**
**P.O.Box 14 69**
**71665 Vaihingen/Enz (DE)**

(56) Entgegenhaltungen:
**BE-A- 495 812          DE-A1- 19 542 024**
**DE-T5-112017 000 935    US-A- 4 584 904**

• **Müller Herbert W.: "Die Umlaufgetriebe" In: "Die Umlaufgetriebe", 31. Dezember 1998 (1998-12-31), Springer Verlag, XP055827790, ISBN: 978-3-642-63698-1 Seite 80 - Seite 91; Abbildungen 3.8, 3.9**

**Beschreibung**

Die Erfindung betrifft ein Zykloidgetriebe gemäß dem Oberbegriff des Anspruchs 1. Insbesondere findet das erfindungsgemäße Zykloidgetriebe Verwendung als Präzisionsgetriebe in der Robotertechnologie.

Aus der Zahnradtheorie bekannte vorteilhafte Eigenschaften von vereinzelt auch als Trochoidengetriebe bezeichneten Zykloidgetrieben sind:

- eine hohe Genauigkeit im spielfreien Betrieb,
- eine hohe Belastbarkeit,
- eine geringe Reibung und
- ein hoher Wirkungsgrad.

Aufgrund dieser Eigenschaften sind Zykloidgetriebe besonders zur Verwendung in Präzisionsgetriebekonstruktionen geeignet.

Ein aus dem Stand der Technik bekanntes Zykloidgetriebe umfasst:

- Einen hohlzylinderförmigen Grundkörper.

Der Grundkörper ist mit einer Innenverzahnung versehen. Die Innenverzahnung befindet sich am Innenumfang des hohlzylinderförmigen Grundkörpers.

- Eine zentrale Welle.

Die zentrale Welle ist koaxial zur Zylinderachse des Grundkörpers und drehbar gegenüber dem Grundkörper angeordnet. Sie ist mit einem exzentrischen Abschnitt versehen.

- Ein Rad mit einer Außenverzahnung.

Das Rad mit Außenverzahnung ist auf dem exzentrischen Abschnitt drehbar und in dem Grundkörper umlaufend angeordnet. Die Außenverzahnung kämmt mit der Innenverzahnung am Innenumfang des hohlzylinderförmigen Grundkörpers.

- Ein koaxial zur Zylinderachse angeordnetes Organ.

Dieses Organ ist sowohl drehbar gegenüber der zentralen Welle als auch drehbar gegenüber dem Grundkörper angeordnet.

Das Organ oder die zentrale Welle bilden ein Eingangsorgan des Zykloidgetriebes. Das jeweils verbleibende Element, i.e. die zentrale Welle oder das Organ, bildet ein Ausgangsorgan des Zykloidgetriebes.

Ferner weist jedes Zykloidgetriebe Mittel zur Umwandlung der Abwälzbewegung des Rads im Grundkörper in eine Rotationsbewegung des Organs um die Zylinderachse auf.

Die Mittel zur Umwandlung der Abwälzbewegung des Rads im Grundkörper in eine Rotationsbewegung des Organs um die Zylinderachse umfassen ein oder mehrere Transformationselemente. Diese Mittel werden nachfolgend auch kurz als Transformationssystem bezeichnet. Die an der Innenverzahnung umlaufende Abwälzbewegung des Rads im Grundkörper wird nachfolgend kurz als Planetenbewegung bezeichnet. Die Planetenbewegung findet demnach als an der Innenverzahnung umlaufende Abwälzbewegung des Rads im Grundkörper statt. Wegen seiner bevorzugten Ausgestaltung als Ausgangsorgan des Getriebes wird das Organ auch als Ausgang sfl an sch bezeichnet.

Durch JP 2020 122582 A ist ein Zykloidgetriebe bekannt. Die Umwandlung der Planetenbewegung der Räder in die Drehbewegung des Ausgangsflansches erfolgt mittels exzentrisch angeordneter Exzenterwellen.

Durch JP H01 169154 A ist ein Zykloidgetriebe bekannt. Die Umwandlung der Planetenbewegung der Räder in die Drehbewegung des Ausgangsflansches erfolgt mittels in den Ausgangsflansch integrierter Stifte.

Durch EP 2 255 104 A1 ist ein Zykloidgetriebe bekannt. Die Umwandlung der Planetenbewegung der Räder in die Drehbewegung des Ausgangsflansches erfolgt mittels zwischen Rädern und Ausgangsflansch angeordneten Kreuzen.

Als Verzahnung kommt bei diesen Getrieben eine Zykloidenform der Verzahnung des im als Gehäuse dienenden Grundkörper abwälzenden Rads zum Einsatz. Die Zykloidenform der Verzahnung wird nachfolgend kurz als Zykloidenverzahnung bezeichnet.

Durch US 2004/083850 A1 ist ebenfalls ein Getriebe bekannt. Bei diesem ist das im Gehäuse abwälzende Zahnrad mit einer Spezialverzahnung versehen.

Bei der Gruppe der voranstehend beschriebenen Zykloidgetriebe handelt es sich um spezielle Planetengetriebe. Bei diesen wälzen die Räder im hohlzylinderförmigen Grundkörper ab. Dabei kämmt deren Außenverzahnung mit der Innenverzahnung im hohlzylinderförmigen Grundkörper. Die Räder führen währenddessen eine Planetenbewegung um die Mittelachse des Getriebes aus. Die Mittelachse des Getriebes stimmt mit der Zylinderachse des Grundkörpers überein.

Jedes der Transformationssysteme dieser Zykloidgetriebe überträgt gleichzeitig den Kraftfluss von den Rädern auf den Ausgangsflansch. Der Nachteil ist, dass dies einen bestimmten radialen Raum in den Rädern einnimmt, was die erreichbaren Mindestabmessungen der Getriebe begrenzt.

Ebenfalls geeignet für Präzisionsgetriebekonstruktionen sind Planetengetriebe.

Ein für Präzisionsgetriebekonstruktionen geeignetes Planetengetriebe ist durch US 10,352,400 B2 bekannt. Der Vorteil dieses Getriebes ist die symmetrische Gegenverteilung der Kräfte auf die starren Räder. Dies führt zu einer relativ hohen Belastbarkeit. Nachteilig an einem solchen Getriebe ist, dass der radiale Raum von den Satellitenrädern selbst eingenommen wird.

Darüber hinaus sind zur Verwendung in Präzisionsgetriebekonstruktionen Getriebe bekannt, welche nach einem Prinzip arbeiten, das auch als Verformungswellenöbertragung bezeichnet wird. Diese Getriebe umfassen ein radial verformbares Element, was als Flexspline oder auch als Flex-Spline bezeichnet wird. Auf dem Flexspline ist eine speziell geformte Außenverzahnung gebildet. Durch eine radiale Verformung des Flexspline kommt die Außenverzahnung mit einer Innenverzahnung in Eingriff. Die Innenverzahnung ist in einem starren Gegenstück ausgebildet. Das starre Gegenstück wird als Circularspline oder auch als Circular-Spline bezeichnet. Das verwendete Prinzip ermöglicht die Herstellung von kleinen Getrieben und von Getrieben mit einer zentralen Durchgangsöffnung. Eine solche zentrale Durchgangsöffnung wird nachfolgend auch als Hollow-Shaft oder als zentrale Hollow-Shaft-Öffnung bezeichnet.

Ein solches Getriebe wird beispielsweise von der Firma HARMONIC DRIVE SYSTEMS hergestellt.

Die Flexibilität des verformbaren Elements im Getriebe begrenzt jedoch den Wert der Steifheit und der Belastbarkeit Bei kleinen Getrieben mit einer Abnahme des Durchmessers der Flexspline verkleinert sich auch das Verzahnungsmodul. Dies begrenzt sowohl die Belastbarkeit als auch den maximal erreichbaren Wert des Übersetzungsverhältnisses.

Durch JP 2014 035030 A ist ein Zykloidgetriebe mit einem zweistufigen Rad bekannt. Das Zykloidgetriebe weist ein Gehäuse auf, in dem eine Antriebswelle drehbar gelagert ist. Das Rad ist auf einem exzentrischen Abschnitt der Antriebswelle drehbar angeordnet. Es weist eine Außenverzahnung auf. Mittels der Außenverzahnung kämmt das Rad mit einer Innenverzahnung des Gehäuses. Das Rad weist außerdem eine Innenverzahnung auf Via der Innenverzahnung kämmt das Rad mit einer Außenverzahnung einer Abtriebswelle, Das Getriebe ist frei von Nadelrollen ausgeführt. Stattdessen umfasst es eine Zykloidenverzahnung seiner miteinander kämmenden Verzahnungen. Die Zykloidenverzahnung ist in Form einer modifizierten Zykloide ausgeführt. Nachteilig hieran ist, dass die Verwendung einer Innenverzahnung im Rad radialen Raum beansprucht. Darüber hinaus beansprucht auch die Lagerung der Eingangswelle in der Ausgangswelle radialen Raum. Beides begrenzt die Bildung kleiner Getriebe mit einer zentralen Hollow-Shaft-Öffnung.

Durch BE 495812, durch US 4,584,904 und durch DE 195 42 024 A1 ist jeweils ein Getriebe bekannt. Das Getriebe umfasst einen hohlzylinderförmigen Grundkörper, der eine erste Innenverzahnung aufweist. Das Getriebe umfasst außerdem einen Ring. Dieser ist mit einer zweiten Innenverzahnung versehen. Der Ring ist um die Zylinderachse des Grundkörpers drehbar angeordnet. Das Getriebe umfasst darüber hinaus eine zentrale Welle. Die zentrale Welle erstreckt sich entlang der Zylinderachse. Die zentrale Welle ist um die Zylinderachse drehbar angeordnet und weist einen exzentrischen Abschnitt auf. Das Getriebe umfasst ferner ein Rad. Das Rad ist drehbar auf dem exzentrischen Abschnitt angeordnet und verfügt über eine erste Außenverzahnung. Das Rad kämmt mit der ersten Außenverzahnung mit der ersten Innenverzahnung des hohlzylinderförmigen Grundkörpers. Es verfügt über eine zweite Außenverzahnung. Das Rad kämmt mit der zweiten Außenverzahnung mit der zweiten Innenverzahnung des Rings. Das Rad ist als ein Doppelrad ausgeführt. Das Doppelrad umfasst zwei in Übereinstimmung ihrer Achsen unverdrehbar miteinander verbundene Zahnkränze. Jeder Zahnkranz ist mit einer der beiden Außenverzahnungen versehen. Die Außenverzahnungen sind durch trochoidale Oberflächen gebildet. Die trochoidale Oberfläche der ersten Außenverzahnung weist eine andere Zähnezahl auf als die trochoidale Oberfläche der zweiten Außenverzahnung. Der Begriff Zähnezahl steht hierbei stellvertretend für die Anzahl der durch dazwischenliegende Senken getrennten Erhebungen. Die Erhebungen und Senken werden von der trochoidalen Oberfläche gebildet. Die trochoidale Oberfläche ist einer Zykloidenbahn nachempfunden.

Die vorbekannten Getriebe weisen keine zentrale Hollow-Shaft-Öffnung auf.

Durch DE 11 2017 000 935 T5 ist ebenfalls ein Getriebe bekannt. Dieses Getriebe umfasst einen hohlzylinderförmigen Grundkörper. Der Grundkörper weist eine erste Innenverzahnung auf. Das Getriebe umfasst außerdem einen Ring, der mit einer zweiten Innenverzahnung versehen ist. Der Ring ist um die Zylinderachse des Grundkörpers drehbar angeordnet. Das Getriebe umfasst darüber hinaus eine zentrale Welle. Die zentrale Welle erstreckt sich entlang der Zylinderachse, Sie ist um die Zylinderachse drehbar angeordnet. Die zentrale Welle weist einen exzentrischen Abschnitt auf. Das Getriebe umfasst ferner ein Rad, welches drehbar auf dem exzentrischen Abschnitt angeordnet ist. Das Rad verfügt über eine erste Außenverzahnung. Das Rad kämmt mit der ersten Außenverzahnung mit der ersten Innenverzahnung des hohlzylinderförmigen Grundkörpers. Das Rad verfügt über eine zweite Außenverzahnung und kämmt mit dieser mit der zweiten Innenverzahnung des Rings. Das Rad ist als ein Doppelrad ausgeführt. Das Doppelrad umfasst zwei in Übereinstimmung ihrer Achsen unverdrehbar miteinander verbundene Einzelräder. Jedes Einzelrad ist mit jeweils einer der beiden Außenverzahnungen versehen. Als Außenverzahnung dient eine Zykloidenstruktur. Jedes Einzelrad ist daher als Zykloidenscheibe ausgebildet. Mindestens ein Stift verbindet die beiden Einzelräder. Der Begriff Stift steht hierbei stellvertretend für einen Stift, eine Schraube oder eine Kombination hiervon. Der Stift ist in axiale Befestigungsbohrungen in den Einzelrädern eingesetzt. Dabei liegen die axialen Befestigungsbohrungen in den Einzelrädern einander gegenüber. Die axialen Befestigungsbohrungen sind als außermittige Durchgangsbohrungen ausgebildet. Alternativ zu einer Verbindung der Einzelräder mittels eines Stifts zu einem Doppelrad ist vorgesehen:

-    die Einzelräder stirnseitig aneinander zu kleben oder
-    das Doppelrad als integrale Struktur herzustellen.

Nachteilig an diesem Getriebe ist, dass bei der Verwendung von Stiften die axialen Befestigungsbohrungen in den beiden Einzelrädern koaxial mit hoher Genauigkeit hergestellt werden müssen. Nur so lässt sich eine hohe Belastbarkeit des Getriebes erreichen. Eine hohe Belastbarkeit erfordert eine hohe Genauigkeit des Getriebes. Die hohe Genauigkeit muss auch an den Lagerbahnen an den beiden Einzelrädern sichergestellt sein. Abweichungen der beiden Einzelräder von der gemeinsamen Drehachse um den exzentrischen Abschnitt stehen einer hohen Genauigkeit und einer hohen Belastbarkeit entgegen. Die axialen Befestigungsbohrungen in den in beiden Einzelrädern koaxial mit hoher Genauigkeit herzustellen ist eine sehr anspruchsvolle Operation. Die notwendige Genauigkeit liegt im Bereich von wenigen Mikrometern. Dies erhöht die Produktionskosten erheblich.

Ein weiterer Nachteil ist, dass die Stifte mit einer Überlappung in die Einzelräder gedrückt werden müssen, um axial gegen Auswurf gesichert zu sein. Wenn die Stifte während des Betriebs von den Rädern ausgestoßen werden, wird das Getriebe beschädigt oder vollständig zerstört. Aber schon eine kleine Überlappung zwischen den Stiften und den Befestigungslöchern in den Rädern verursacht eine Verformung der Räder, was zu einer Abnahme der erreichten Genauigkeit des Getriebes führt. Hierdurch ergeben sich hohe Bewegungsverluste und hohe Winkelübertragungsfehler.

Eine Aufgabe der Erfindung ist es, ein Zykloidgetriebe mit kleinstmöglichem Bauraumbedarf und größtmöglicher Belastbarkeit zu schaffen. Das Zykloidgetriebe soll darüber hinaus eine zentrale Hollow-Shaft-Öffnung aufweisen können. Ferner soll es kostengünstig herstellbar sein. Schließlich soll es eine hohe Präzision aufweisen.

Die Aufgabe wird durch die Merkmale des unabhängigen Anspruchs gelöst. Vorteilhafte Ausführungsformen sind in den Ansprüchen, den Zeichnungen sowie in der nachfolgenden Beschreibung, einschließlich der zu den Zeichnungen zugehörigen, wiedergegeben.

Die Erfindung betrifft demnach ein Zykloidgetriebe.

Das Getriebe ist mit einem kurz auch als Körper bezeichneten hohlzylinderförmigen Grundkörper ausgestattet. Der Grundkörper ist mit einer ersten Innenverzahnung versehen. Das Getriebe umfasst einen ebenfalls hohlzylinderförmigen Ring. Der Ring ist mit einer zweiten Innenverzahnung versehen. Der Ring ist drehbar an dem Grundkörper angeordnet. Die Zylinderachsen des hohlzylinderförmigen Grundkörpers und des hohlzylinderförmigen Rings stimmen miteinander überein. Der Ring ist um die Zylinderachse drehbar an dem Grundkörper angeordnet.

Der Ring kann als Innenring im Grundkörper drehbar gelagert angeordnet sein. Alternativ können der Grundkörper und der Ring axial benachbart drehbar miteinander verbunden sein.

Zwischen dem als Innenring ausgeführten Ring und dem Grundkörper kann ein axialer Trennring angeordnet sein.

Ein Lager kann zwischen dem Grundkörper und dem beispielsweise als Innenring ausgeführten Ring angeordnet sein. Beispielsweise kann das Lager den Grundkörper und den Innenring drehbar miteinander verbinden.

Eine oder beide Innenverzahnungen können beispielsweise Nadelrollen umfassen. Die Nadelrollen können in Innennuten eingelegt sein. Solche Innennuten für die Nadelrollen können in den Innenumfang des Grundkörpers eingearbeitet sein. Alternativ oder zusätzlich können solche Innennuten für die Nadelrollen in den Innenumfang des Rings eingearbeitet sein. Der Ring kann hierbei beispielsweise als Innenring ausgeführt sein.

Darüber hinaus umfasst das Zykloidgetriebe eine zentrale Welle mit einem exzentrischen Abschnitt. Die zentrale Welle erstreckt sich entlang der Zylinderachse. Sie ist gegenüber dem Grundkörper um die Zylinderachse drehbar angeordnet.

Wichtig ist in diesem Zusammenhang hervorzuheben, dass im vorliegenden Dokument der Begriff Achse im Gegensatz zu dem Begriff Welle eine geometrische Achse und nicht ein Maschinenelement bezeichnet.

Die zentrale Welle kann an ihren beiden voneinander beabstandeten Enden einmal am Grundkörper und einmal am Ring drehbar gelagert sein. Der Ring kann wiederum als ein Innenring ausgeführt sein.

Beispielsweise kann ein Deckel mit dem Grundkörper verbunden sein, an oder in dem Deckel die zentrale Welle drehbar gelagert ist. Der Deckel kann fest und demnach unverdrehbar mit dem Grundkörper verbunden sein.

Alternativ oder zusätzlich kann ein Deckel mit dem Ring verbunden sein. An oder in dem Deckel ist die zentrale Welle drehbar gelagert. Der Ring kann wiederum beispielsweise als Innenring ausgeführt sein.

Der Deckel kann fest mit dem Ring verbunden sein. Hiernach ist der Deckel unverdrehbar mit dem Ring verbunden. Der Ring kann beispielsweise als Innenring ausgeführt sein.

Insbesondere können Lager vorgesehen sein, um die zentrale Welle gegenüber

- dem Grundkörper und/oder
- dem beispielsweise als Innenring ausgeführten Ring und/oder
- dem unverdrehbar mit dem Grundkörper verbundenen Deckel und/oder
- dem unverdrehbar mit dem beispielsweise als Innenring ausgeführten Ring verbundenen Deckel

drehbar anzuordnen.

Denkbar ist darüber hinaus eine alternative oder zusätzliche drehbare Lagerung des Deckels gegenüber dem Grundkörper und/oder des Deckels gegenüber dem beispielsweise als Innenring ausgeführten Ring.

Ferner umfasst das Zykloidgetriebe ein drehbar auf dem exzentrischen Abschnitt der zentralen Welle angeordnetes Rad. Das Rad ist mit einer ersten Außenverzahnung versehen. Es kämmt via der ersten Außenverzahnung mit der ersten Innenverzahnung des hohlzylinderförmigen Grundkörpers. Darüber hinaus ist das Rad mit einer zweiten Außenverzahnung versehen und kämmt via der zweiten Außenverzahnung mit der zweiten Innenverzahnung des ebenfalls hohlzylinderförmigen Rings.

Das Rad ist als ein Doppelrad ausgeführt. Das Doppelrad besteht aus zwei Einzelrädern, die unverdrehbar miteinander verbunden sind. Die Achsen der Einzelräder stimmen miteinander überein. Die beiden Einzelräder sind mit jeweils einer Außenverzahnung versehen.

Mit anderen Worten: Ist das Rad als ein Doppelrad ausgeführt, besteht es aus zwei in Übereinstimmung ihrer Achsen unverdrehbar miteinander verbundenen und mit jeweils einer Außenverzahnung versehenen Einzelrädern.

Gemäß dem kennzeichnenden Teil des Anspruchs 1 sind die Einzelräder durch geklebte Verbindungsmittel miteinander verbunden, die sowohl mit dem einen, als auch mit dem anderen Einzelrad verklebt sind.

Die geklebten Verbindungsmittel dienen zugleich einer Sicherung deren exakter axialer Ausrichtung in Übereinstimmung ihrer Achsen.

Das Getriebe zeichnet sich also dadurch aus, dass die beiden Einzelräder jeweils mit mindestens einem, sowohl mit dem einen als auch mit dem anderen Einzelrad verklebten Verbindungsmittel verbunden sind.

Ein Verbindungsmittel ist hiernach an geeigneter Stelle mit dem einen Einzelrad verklebt. Das Verbindungsmittel ist hiernach ferner an geeigneter Stelle mit dem anderen Einzelrad verklebt.

Die geeigneten Stellen, an denen das Verbindungsmittel mit den beiden Einzelrädern jeweils verklebt ist, lassen zwischen den beiden Einzelrädem im unverklebten Zustand vorteilhaft sowohl ein Spiel in Bezug auf die Achslage als auch in Bezug auf die Drehlage der beiden Einzelräder um deren Achsen zu. Hierdurch wird durch die Verklebung sowohl mit dem einen als auch mit dem anderen Einzelrad ein Toleranzausgleich geschaffen. Dies erlaubt eine einfache und kostengünstige Herstellung der Einzelräder. Beispielsweise können so zwei Einzelräder innerhalb vorgebbarer Toleranzgrenzen hergestellt werden. Ein erstes der beiden Einzelräder wird in eine Lehre eingelegt. Anschließend wird das Verbindungsmittel am ersten Einzelrad angeordnet. Nun kann ein Klebemittel zur Herstellung der Verklebung zwischen dem ersten Einzelrad und dem Verbindungsmittel und zwischen dem Verbindungsmittel und dem verbleibenden Einzelrad eingebracht werden. Solange das Klebemittel noch nicht ausgehärtet ist, wird das zweite Einzelrad passgenau mittels der Lehre ausgerichtet und am ersten Einzelrad, angeordnet. Nach dem Aushärten des Klebemittels sind die beiden Einzelräder exakt zueinander ausgerichtet. Beispielsweise ist ein Verbindungsmittel in eine geeignete erste Ausnehmung in dem einen Einzelrad eingeklebt. Zusätzlich ist das Verbindungsmittel in eine geeignete zweite Ausnehmung in dem anderen Einzelrad eingeklebt.

Bei den Verbindungsmitteln kann es sich um geklebte Stiftverbindungen handeln. Beispielsweise können die zwei Einzelräder durch geklebte Stiftverbindungen miteinander verbunden und axial gesichert sein.

Die geklebten Stiftverbindungen können durch axiale Durchgangslöcher in einem ersten der beiden Einzelräder in axiale Sacklöcher im verbleibenden Einzelrad der beiden Einzelräder reichen. Die Stiftverbindungen sind sowohl in den Durchgangslöchern mit dem ersten Einzelrad verklebt als auch in den Sacklöchern mit dem verbleibenden Einzelrad.

Alternativ oder zusätzlich können die geklebten Stiftverbindungen in an den Einzelrädern stirnseitig gegenüberliegend angeordneten Sacklöchern angeordnet und eingeklebt sein.

Sind mehrere Stiftverbindungen vorgesehen, kann ein Teil, wie zuvor beschrieben, in Durchgangslöchern im einen und in Sacklöchern im anderen Einzelrad eingeklebt sein. Ein verbleibender Teil der Stiftverbindungen kann in beiden Einzelrädern in Sacklöcher eingeklebt sein.

Alternativ oder zusätzlich können die zwei Einzelräder durch mindestens einen geklebten Ring axial gesichert sein. Die beiden Einzelräder können zusätzlich unmittelbar miteinander verklebt sein.

Durch das Verkleben jedes der beiden Einzelräder mit einem mit beiden Einzelrädern verklebten Verbindungsmittel wird eine kostengünstige und einfache Herstellung des als Doppelrad ausgeführten Rads geschaffen. Das Doppelrad ist hierbei mit höchster Präzision ausgeführt. Das Doppelrad trägt die erste und die zweite Außenverzahnung und wird durch zwei getrennt hergestellte Einzelräder gebildet. Um die Einzelräder mit höchster Präzision und dennoch kostengünstig zum Doppelrad miteinander zu verbinden, dienen die Verbindungsmittel. Die Verbindungsmittel sind sowohl mit dem einen als auch mit dem anderen Einzelrad unter Ausgleich einer Toleranz in Bezug auf Achs- und Drehlage verklebbar. Wird beispielsweise eine Lehre beim Verkleben der Einzelräder mit den Verbindungsmitteln zum Doppelrad verwendet, können Herstellungstoleranzen der Außenverzahnungen und der Lagerringe der Einzelräder untereinander ausgeglichen werden.

Es ist ersichtlich, dass die Erfindung durch ein Zykloidengetriebe mit einer zentralen Welle verwirklicht sein kann. Die zentrale Welle ist beidseitig an ihren Enden gelagert. Die zentrale Welle weist einen exzentrischen Abschnitt auf. Auf dem exzentrischen Abschnitt kann ein Radiallager angeordnet sein. Auf dem Radiallager ist ein Doppelrad angeordnet. Das Doppelrad verfügt über zwei Außenverzahnungen in Zykloidenform, Es ist durch Zusammenkleben von zwei Einzelrädern gebildet. Die Einzelräder sind axial durch Verbindungsmittel, wie etwa geklebte Stifte oder einen geklebten Ring, gegeneinander gesichert. Die Verbindungsmittel übertragen gleichzeitig einen Teil des Drehmoments zwischen den beiden Rädern. Die Durchmesser der Kopfkreise und der Fuß- beziehungsweise Fersenkreise der Außenverzahnungen sind an beiden Einzelrädern gleich, während die Anzahl der Zähne variiert.

Eine vorteilhafte Weiterbildung des Getriebes sieht vor, dass die Durchmesser der Kopfkreise und die Durchmesser der manchmal auch als Fersenkreise bezeichneten Fußkreise der beiden Außenverzahnungen am Rad gleich sind, wobei die Anzahl der Zähne unterschiedlich ist.

Vorteilhaft weist das Getriebe eine Zykloidenverzahnung zumindest für die erste Außenverzahnung und die zweite Außenverzahnung auf.

Die Innenverzahnungen können Nadelrollen umfassen, die in am Innenumfang des Grundkörpers und des Rings eingelassenen Innennuten angeordnet sind.

Die in den Innennuten des Körpers und des bevorzugt als Innenring ausgeführten Rings angeordneten Nadelrollen sind bevorzugt axial und radial in den Aussparungen der Deckel und gesichert.

Die zentrale Welle ist vorteilhaft hohl ausgeführt. Sie kann hiernach als Hollow-Shaft beziehungsweise mit einer auch als Hollow-Shaft-Öffnung bezeichneten zentralen Durchgangsöffnung ausgeführt sein.

Wichtig ist hervorzuheben, dass die Erfindung verwirklicht sein kann durch ein Getriebe mit den Merkmalen des Anspruchs 1 und mit einer Zykloidenverzahnung und:

- mit einem Körper und einem Innenring, zwischen denen ein axialer Trennring angeordnet ist und
- mit einem Lager das den Körper und den Innenring drehbar miteinander verbindet.
- Die Innenverzahnungen umfassen Nadelrollen und Innennuten für die Nadelrollen, die mit einer zykloiden Außenverzahnung des als Doppelrad ausgeführten Rads in Eingriff stehen.
- Das Rad befindet sich auf einem an der Welle gebildeten, kurz als Exzenterfläche bezeichneten exzentrischen Abschnitt.
- Die Welle ist an beiden Enden der Lager in den Deckeln angeordnet.
- Die Deckel sind fest mit dem Körper bzw. dem Innenring verbunden.

Das Getriebe zeichnet sich beispielsweise dadurch aus, dass die Durchmesser der Kopfkreise und die Durchmesser der manchmal auch als Fersenkreise bezeichneten Fußkreise der beiden Zykloidenverzahnungen am als Doppelrad ausgeführten Rad gleich sind, wobei die Anzahl der Zähne unterschiedlich ist.

Zusätzliche, über die vollständige Lösung der gestellten Aufgabe und/oder über die voran zu den einzelnen Merkmalen genannten Vorteile hinausgehende Vorteile gegenüber dem Stand der Technik sind nachfolgend aufgeführt.

Die Erfindung schafft ein Präzisionsgetriebe mit Zykloidenverzahnung, dessen Verwendung insbesondere in der Robotertechnologie liegt. Insbesondere ist die Erfindung industriell verwendbar, wo Präzisionsgetriebe mit kleinen Abmessungen, mit geringem Gewicht und relativ großer Öffnung in der Welle erforderlich sind.

Die Erfindung reduziert radiale Platzbeschränkungen in Zykloidengetrieben, indem keine Transformationselemente zwischen den Rädern und dem Austrittsflansch verwendet werden. Dies erfüllt die Anforderungen an Präzisionsgetriebe mit kleinen Abmessungen, geringem Gewicht und einer relativ großen zentralen Durchgangsöffnung in der Welle.

Die Erfindung ermöglicht hiernach Zykloidengetriebe-Konstruktionen mit kleinen Abmessungen und mit Hollow-Shaft beziehungsweise einer auch als Hollow-Shaft-Öffnung bezeichneten zentralen Durchgangsöffnung.

Darüber hinaus ist es möglich, mit einer relativ hohen Belastbarkeit und niedrigen Herstellungskosten einen viel größeren Bereich und einen maximalen Wert der Übersetzungsverhältnisse zu erreichen.

Die Erfindung wird nachfolgend anhand von in der Zeichnung dargestellter Ausführungsbeispiele näher erläutert. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar. Es zeigen in schematischer Darstellung:

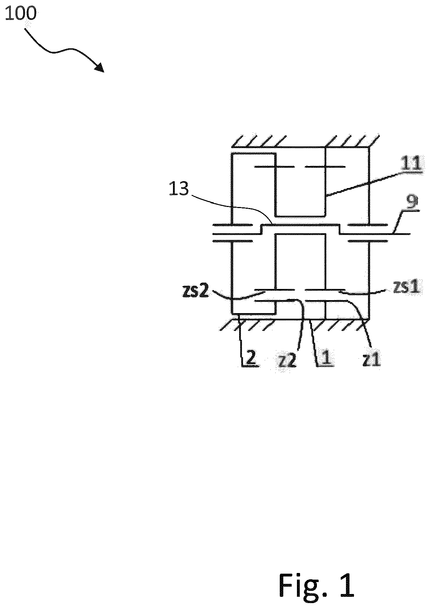

Fig. 1    ein kinematisches Schema gemäß eines ersten Ausführungsbeispiels eines als Zykloidgetriebe ausgeführten Getriebes,

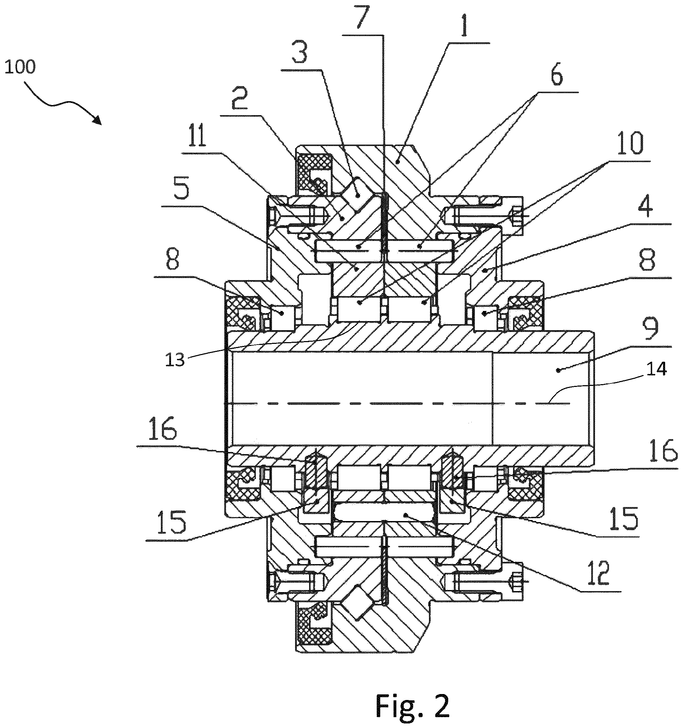

Fig. 2    ein Ausführungsbeispiel eines als Zykloidgetriebe ausgeführten Getriebes gemäß dem kinematischen Schema aus Fig. 1 in einem entlang der Zylinderachse verlaufenden Längsschnitt durch das Getriebe,

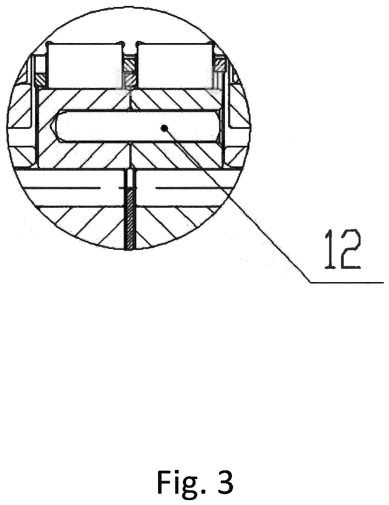

Fig. 3    ein erstes Ausführungsbeispiel eines Doppelrads in einer Detailansicht in einem Längsschnitt. Zwei Einzelräder sind durch geklebte Verbindungsmittel miteinander zum Doppelrad verbunden. Bei diesem Ausführungsbeispiel umfassen die Verbindungsmittel geklebte Stiftverbindungen. Die Einzelräder sind mittels geklebter Stiftverbindungen zum Doppelrad miteinander verbunden. Die geklebten Stiftverbindungen sind in einem der zwei Einzelräder in axiale Sacklöcher eingeklebt. Am verbleibenden Einzelrad sind gegenüberliegend der Sacklöcher Durchgangsöffnungen angeordnet, in welche die Stiftverbindungen ebenfalls eingeklebt sind. Die geklebten Stiftverbindungen reichen dabei durch die axialen Durchgangslöcher in dem einem der zwei Einzelräder in die axialen Sacklöcher in dem verbleibenden Einzelrad,

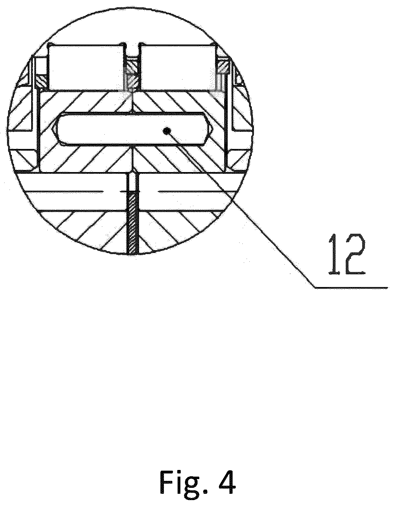

Fig. 4    ein zweites Ausführungsbeispiel eines Doppelrads in einer Detailansicht in einem Längsschnitt. Zwei Einzelräder sind durch geklebte Verbindungsmittel miteinander zum Doppelrad verbunden. Bei diesem Ausführungsbeispiel umfassen die Verbindungsmittel geklebte Stiftverbindungen. Die Einzelräder sind mittels geklebter Stiftverbindungen zum Doppelrad miteinander verbunden. An beiden Einzelrädem sind einander gegenüberliegend Sacklöcher angeordnet. Die geklebten Stiftverbindungen sind beidseitig in die gegenüberliegenden Sacklöcher eingeklebt. Die geklebten Stiftverbindungen reichen dabei von dem einen axialen Sackloch in dem einem der zwei Einzelräder in das jeweils gegenüberliegende axiale Sackloch in dem verbleibenden Einzelrad,

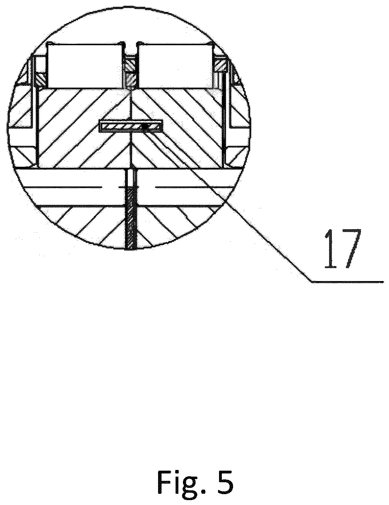

Fig. 5    ein drittes Ausführungsbeispiel eines Doppelrads in einer Detailansicht in einem Längsschnitt. Zwei Einzelräder sind durch geklebte Verbindungsmittel miteinander zum Doppelrad verbunden. Bei diesem Ausführungsbeispiel umfassen die Verbindungsmittel einen geklebten Ring. Die Einzelräder sind mittels des geklebten Rings zum Doppelrad miteinander verbunden. An beiden Einzelrädem sind einander gegenüberliegend ringförmige Nuten eingelassen. Der geklebte Ring ist beidseitig in die gegenüberliegenden ringförmigen Nuten eingeklebt. Die ringförmigen Nuten werden auch Nutenringe oder Ringnuten bezeichnet. Der geklebte Ring reicht dabei von dem Nutenring in dem einem der zwei Einzelräder in den gegenüberliegenden Nutenring in dem verbleibenden Einzelrad,

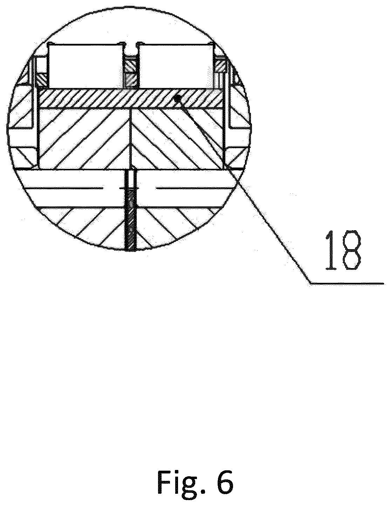

Fig. 6    ein viertes Ausführungsbeispiel eines Doppelrads in einer Detailansicht in einem Längsschnitt. Zwei Einzelräder sind durch geklebte Verbindungsmittel miteinander zum Doppelrad verbunden. Bei diesem Ausführungsbeispiel umfassen die Verbindungsmittel einen geklebten Ring. Die Einzelräder sind mittels des geklebten Rings zum Doppelrad miteinander verbunden. Der Ring ist auf die den Außenverzahnungen abgewandten Innenflächen der beiden Einzelräder geklebt. Der geklebte Ring ist beidseitig an die Innenflächen angeklebt. Der geklebte Ring reicht dabei über das gesamte Doppelrad hinweg von der einen der Kontaktfläche zwischen den beiden Einzelrädem abgewandten Außenkante der Innenfläche des einen Einzelrads bis zur Außenkante der Innenfläche des verbleibenden Einzelrads,

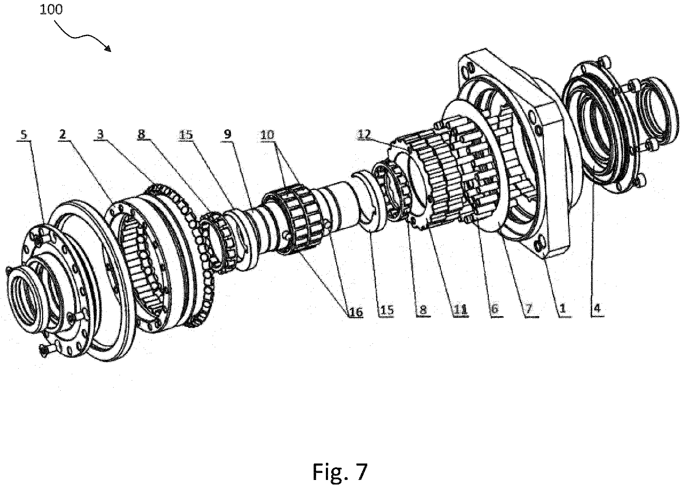

Fig. 7    eine Explosionszeichnung des als Zykloidgetriebe ausgeführten Getriebes aus Fig. 2 in einer axonometrischen Darstellung.

Ein in Fig. 1, Fig. 2, Fig. 3, Fig. 4, Fig. 5, Fig. 6 und Fig. 7 ganz oder in Teilen dargestelltes, als ein Zykloidgetriebe 100 ausgebildetes Getriebe umfasst:

- einen hohlzylinderförmigen Grundkörper 1, Der Grundkörper 1 wird auch kurz als Körper bezeichnet. Der Grundkörper 1 ist mit einer ersten Innenverzahnung $z1$ versehen.
- eine zentrale Welle 9. Die zentrale Welle 9 erstreckt sich entlang der Zylinderachse 14 des Grundkörpers 1. Die zentrale Welle 9 ist koaxial zur Zylinderachse 14 des Grundkörpers 1 angeordnet. Die zentrale Welle 9 ist drehbar gegenüber dem Grundkörper 1 angeordnet. Die zentrale Welle 9 ist mit einem exzentrischen Abschnitt 13 versehen.
- ein auf dem exzentrischen Abschnitt 13 drehbar angeordnetes Rad 11. Das Rad 11 läuft in dem Grundkörper 1 um. Das Rad 11 ist mit einer ersten Außenverzahnung $zs1$ versehen. Die erste Außenverzahnung $zs1$ kämmt mit der ersten Innenverzahnung $z1$ am Innenumfang des hohlzylinderförmigen Grundkörpers 1.
- einen koaxial zur Zylinderachse 14 angeordneten Ring. Der Ring ist sowohl drehbar gegenüber der zentralen Welle 9 als auch drehbar gegenüber dem Grundkörper 1 angeordnet.

Wie bereits erwähnt, bezeichnet im vorliegenden Dokument der Begriff Achse im Gegensatz zu dem Begriff Welle eine geometrische Achse und nicht ein Maschinenelement.

Bei dem als ein Zykloidgetriebe 100 ausgebildeten Getriebe ist:

- der hohlzylinderförmige Ring mit einer zweiten Innenverzahnung $z2$ versehen. Der Ring ist in Übereinstimmung seiner Zylinderachse mit der Zylinderachse 14 des hohlzylinderförmigen Grundkörpers 1 um die Zylinderachse 14 des hohlzylinderförmigen Grundkörpers 1 drehbar in oder an dem Grundkörper 1 angeordnet,
- das Rad 11 drehbar auf dem exzentrischen Abschnitt 13 der zentralen Welle 9 angeordnet,
- das Rad 11 mit der ersten Außenverzahnung $zs1$

versehen. Die erste Außenverzahnung zs1 des Rads 11 kämmt mit der ersten Innenverzahnung z1 des Grundkörpers 1,

- das Rad 11 mit einer zweiten Außenverzahnung zs2 versehen. Die zweite Außenverzahnung zs2 des Rads 11 kämmt mit der zweiten Innenverzahnung z2 des hohlzylinderförmigen Rings.

Diese Maßnahmen erlauben, ein als Zykloidgetriebe 100 ausgebildetes Getriebe sowohl mit kleinstmöglichem Bauraumbedarf als auch mit größtmöglicher Belastbarkeit zu schaffen. Ein solches Getriebe kann zusätzlich frei von Mitteln zur Umwandlung der Abwälzbewegung des Rads, 11 im Grundkörper 1 in eine Rotationsbewegung eines Organs ausgeführt werden. Bei dem Zykloidgetriebe 100 handelt es sich bei dem Organ um den Ring. Der Ring ist um die Zylinderachse 14 drehbar am Grundkörper 1 gelagert. Ein gesondertes Transformationssystem ist deshalb nicht erforderlich.

Vorteilhaft sind die Durchmesser der Kopfkreise und die Durchmesser der manchmal auch als Fersenkreise bezeichneten Fußkreise der beiden Außenverzahnungen zs1, zs2 am Rad 11 gleich, wobei die Anzahl der Zähne unterschiedlich ist. Hierdurch wird eine Steigerung der Belastbarkeit des geschaffenen Getriebes bei maximaler Ausnutzung des zur Verfügung stehenden Bauraums erzielt.

Vorteilhaft ist die zentrale Welle 9 hohl ausgeführt. Hierdurch wird ein als ein hochbelastbares Zykloidgetriebe 100 ausgeführtes Getriebe geschaffen. Das Getriebe ist für Präzisionsgetriebekonstruktionen geeignet. Das Getriebe weist zusätzlich zu den weiter voranstehend und nachfolgend noch beschriebenen Vorteilen eine zentrale Hollow-Shaft-Öffnung auf.

Bevorzugt ist der Ring als ein im Grundkörper 1 drehbar gelagert angeordneter Innenring 2 ausgeführt. Alternativ können der Grundkörper 1 und der Ring axial benachbart drehbar miteinander verbunden sein.

Vorteilhaft kann zwischen dem bevorzugt als Innenring 2 ausgeführten Ring und dem Grundkörper 1 ein axialer Trennring 7 angeordnet sein.

Eine Weiterbildung eines bevorzugt als Zykloidgetriebe 100 ausgeführten Getriebes sieht vor, dass eine oder beide Innenverzahnungen z1, z2 Nadelrollen 6 umfassen. Demnach umfassen die erste Innenverzahnung z1 und/oder die zweite Innenverzahnung zs2 bevorzugt Nadelrollen 6. Beispielsweise kann ein Deckel 4 mit dem Grundkörper 1 verbunden sein. Im Deckel 4 kann die zentrale Welle 9 drehbar gelagert sein.

Der Deckel 4 kann fest und demnach unverdrehbar mit dem Grundkörper 1 verbunden sein. Demnach kann der Deckel 4 unverdrehbar mit dem Grundkörper 1 verbunden sein.

Alternativ oder zusätzlich kann ein Deckel 5 mit dem beispielsweise als Innenring 2 ausgeführten Ring verbunden sein. Der Deckel 5 kann fest mit dem beispielsweise als Innenring 2 ausgeführten Ring verbunden sein.

Umfassen die Innenverzahnungen z1, z2 Nadelrollen 6, die vorteilhaft in am Innenumfang des Grundkörpers 1 und des Rings eingelassene Innennuten eingelegt sind, so sind die in den Innennuten des Körpers 1 und in den Innennuten des bevorzugt als Innenring ausgeführten Rings 2 angeordnete Nadelrollen 6 bevorzugt axial und radial in eigens hierfür vorgesehenen Aussparungen der Deckel 4 und 5 gesichert (Fig. 2).

Ein bevorzugt als Wälzlager ausgeführtes Lager 3 kann zwischen dem Grundkörper 1 und dem z. B. als Innenring 2 ausgeführten Ring angeordnet sein. Beispielsweise kann das Lager 3 den Grundkörper 1 und den Innenring 2 drehbar miteinander verbinden (Fig. 2).

Die zentrale Welle 9 kann an ihren beiden voneinander beabstandeten Enden einmal am Grundkörper 1 und einmal am beispielsweise als Innenring 2 ausgeführten Ring drehbar gelagert sein.

Insbesondere können Lager 8 vorgesehen sein, um die zentrale Welle 9 gegenüber:

- dem Grundkörper 1 und/oder
- dem beispielsweise als Innenring 2 ausgeführten Ring und/oder
- dem unverdrehbar mit dem Grundkörper 1 verbundenen Deckel 4 und/oder
- dem unverdrehbar mit dem beispielsweise als Innenring 2 ausgeführten Ring verbundenen Deckel 5

drehbar anzuordnen.

Denkbar ist darüber hinaus eine alternative oder zusätzliche drehbare Lagerung des Deckels 4 gegenüber dem Grundkörper 1 und/oder des Deckels 5 gegenüber dem beispielsweise als Innenring 2 ausgeführten Ring.

Eine im Lichte einer einfachen Herstellung der ersten Außenverzahnung zs1 und der zweiten Außenverzahnung zs2 am Rad 11 besonders vorteilhafte Ausgestaltung des Getriebes sieht vor, dass das Rad 11 als ein Doppelrad ausgeführt ist.

Das Doppelrad umfasst zwei in Übereinstimmung ihrer Achsen unverdrehbar miteinander verbundene Einzelräder. Die Einzelräder sind mit jeweils einer der beiden Außenverzahnungen zs1, zs2 versehen. Hierdurch kann die Herstellung der beiden benachbarten Außenverzahnungen zs1 und zs2 vereinfacht werden.

Das als Doppelrad ausgeführte Rad 11 ist vorteilhaft durch Verkleben von zwei Einzelrädern gebildet.

Die beiden Einzelräder sind besonders vorteilhaft durch geklebte Verbindungsmittel miteinander verbunden. Die geklebten Verbindungsmittel sind sowohl mit dem einen als auch mit dem anderen Einzelrad verklebt. Das Verkleben erfolgt in jedem Fall unter Zuhilfenahme geklebter Verbindungsmittel,

Die Verbindungsmittel können geklebte Stiftverbindungen 12 umfassen. Vorteilhaft können die miteinander verklebten Einzelräder durch geklebte Stiftverbindungen 12 axial gesichert sein. Die geklebten Stiftverbindungen 12 können, wie in Fig. 3 dargestellt, durch axiale Durchgangslöcher in einem der zwei Einzelräder in axiale Sacklöcher im verbleibenden Einzelrad der zwei Einzelräder reichen.

Bei einem in Fig. 3 zum Teil dargestellten Doppelrad sind zwei Einzelräder durch geklebte Verbindungsmittel miteinander zum Doppelrad verbunden. Die Verbindungsmittel umfassen geklebte Stiftverbindungen 12, In einem der zwei Einzelräder sind axiale Sacklöcher angeordnet. Die geklebten Stiftverbindungen 12 sind in die axialen Sacklöcher eingeklebt, je Sackloch eine geklebte Stiftverbindung 12. Am verbleibenden Einzelrad sind gegenüberliegend der Sacklöcher im ersten Einzelrad Durchgangsöffnungen angeordnet. Die Stiftverbindungen 12 sind ebenfalls in die Durchgangsöffnungen eingeklebt, auch hier je Durchgangsöffnung eine geklebte Stiftverbindung 12. Die geklebten Stiftverbindungen 12 reichen dabei durch die axialen Durchgangslöcher in dem einem der zwei Einzelräder in die axialen Sacklöcher in dem verbleibenden Einzelrad.

Die geklebten Stiftverbindungen 12 können alternativ oder zusätzlich in an den Einzelrädern stirnseitig gegenüberliegend angeordneten Sacklöchern angeordnet sein, wie in Fig. 4 dargestellt.

Bei einem in Fig. 4 zum Teil dargestellten Doppelrad sind zwei Einzelräder durch geklebte Verbindungsmittel miteinander zum Doppelrad verbunden. Die Verbindungsmittel umfassen geklebte Stiftverbindungen 12. in beiden der zwei Einzelräder sind einander gegenüberliegend axiale Sacklöcher angeordnet. Die geklebten Stiftverbindungen 12 sind in die axialen Sacklöcher eingeklebt, je an den einander zugewandten Stirnseiten der Einzelräder einander gegenüberliegendem Paar Sacklöcher eine geklebte Stiftverbindung 12. Die geklebten Stiftverbindungen 12 reichen dabei von einem axialen Sackloch in dem einem der zwei Einzelräder in das jeweils gegenüberliegende axiale Sackloch in dem verbleibenden Einzelrad.

Die Stiftverbindungen 12 weisen vorteilhaft einen Durchmesser D auf. Die Sacklöcher beziehungsweise die Durchgangslöcher weisen vorteilhaft einen Durchmesser D+∆ auf.

Vorteilhaft werden die Stiftverbindungen 12 mit dem Durchmesser D in Sacklöcher und/oder Durchgangslöcher mit dem Durchmesser D+∆ in den Einzelrädern geklebt.

Das als Doppelrad ausgebildete Rad 11 entsteht hierbei durch Verkleben aus zwei getrennten Einzelrädern, Die Einzelräder sind axial durch geklebte Stiftverbindungen 12 gesichert Fig. 2, Fig. 3 und Fig. 4 zeigen drei verschiedene Ausführungen von geklebten Stiftverbindungen 12 zur Verbindung zweier Einzelräder. Die Stifte 12 mit dem Durchmesser D werden in den Einzelrädern in den Löchern des Durchmessers D+∆ verklebt. ∆ steht stellvertretend für eine Ungenauigkeit, die bei der Herstellung und Wärmebehandlung entsteht. Der Unsicherheitswert ∆ wird in der Klebeschicht in den Kontaktflächen der Verbindung eliminiert.

Das als Doppelrad ausgeführte Rad ist hiernach beispielsweise durch Verkleben von zwei Einzelrädem gebildet, die durch geklebte Stiftverbindungen 12 axial gesichert sind.

Die Verbindungsmittel können einen geklebten Ring 17 umfassen, wie in Fig. 5 dargestellt. Durch einen solchen Ring 17 sind die zwei Einzelräder axial gesichert. Der Ring 17 ist in an den Einzelrädern stirnseitig gegenüberliegend angeordnete, ringförmige Nuten eingeklebt. Die Nuten verlaufen ringförmig um die gemeinsame Achse der Einzelräder. Die ringförmigen Nuten werden auch als Nutenringe oder Ringnuten bezeichnet.

Bei einem in Fig. 5 zum Teil dargestellten Doppelrad sind zwei Einzelräder durch geklebte Verbindungsmittel miteinander zum Doppelrad verbunden. Die Verbindungsmittel umfassen den geklebten Ring 17, An beiden Einzelrädern sind an den einander zugewandten Stirnseiten Ringnuten eingelassen. Die Ringnuten sind einander gegenüberliegend angeordnet. Der geklebte Ring 17 ist beidseitig in die gegenüberliegenden Ringnuten eingeklebt. Der geklebte Ring reicht dabei von der Ringnut in dem einem der zwei Einzelräder bis in die gegenüberliegende Ringnut im verbleibenden Einzelrad.

Die Räder können hiernach axial mit dem geklebten Ring 17 verbunden und gesichert werden. Der Aufbau dieser Verbindung zweier Einzelräder ist in Fig. 5 dargestellt. Der Ring 17 der Stärke H wird bei beiden Einzelrädern in die Ringnut der Breite H+∆, geklebt, ∆ ist eine Ungenauigkeit, die bei der Herstellung und Wärmebehandlung entsteht. Der Unsicherheitswert ∆ wird in der Klebeschicht in den Kontaktflächen der Verbindung eliminiert.

Anstatt der Ringe 17 können die Verbindungsmittel auch mit den Ringen 18 verbunden sein, wie in Fig. 6 dargestellt ist.

Bei einem in Fig. 6 zum Teil dargestellten Doppelrad sind zwei Einzelräder durch geklebte Verbindungsmittel miteinander zum Doppelrad verbunden. Die Verbindungsmittel umfassen den geklebten Ring 18. Der Ring 18 ist auf die den Außenverzahnungen abgewandten Innenflächen der beiden Einzelräder geklebt. Der geklebte Ring 18 ist beidseitig an die Innenflächen angeklebt. Der geklebte Ring 18 reicht dabei über das gesamte Doppelrad hinweg. Der Ring 18 reicht von der einen der Kontaktfläche zwischen den beiden Einzelrädern abgewandten Außenkante der Innenfläche des einen Einzelrads bis zur Außenkante der Innenfläche des verbleibenden Einzelrads.

Die Räder können hiernach axial mit einem geklebten Ring 18 verbunden und gesichert werden. Der Aufbau dieser Verbindung zweier Einzelräder ist in Fig. 6 dargestellt. Auch hier gleicht die Klebeschicht auf der Kontaktfläche zwischen Ring 18 und den Innenflächen der beiden Einzelräder in der Herstellung und Wärmebehandlung entstandene Ungenauigkeiten aus.

Die Löcher für die Stifte 12 sowie die Ringnut für den Ring 17 im Doppelrad können so vorzugsweise weniger präzise hergestellt werden, da die bei der Herstellung oder Wärmebehandlung resultierenden Ungenauigkeiten durch eine kleine Klebeschicht in den Kontaktflächen beseitigt werden.

Auf diese Weise kann die notwendige Genauigkeit des Getriebes erreicht werden. Hierdurch werden bei gleichzeitig niedrigen Produktionskosten Bewegungsverluste und Winkelübertragungsfehler weitestgehend vermieden. Darüber hinaus wird eine Beschädigung oder Zerstörung des Getriebes durch lose Radkupplungselemente vermieden.

Wichtig ist hervorzuheben, dass sowohl die Ringe 17, 18 als Verbindungsmittel miteinander kombiniert werden können als auch nur einer oder beide Ringe 17, 18 mit den Stiftverbindungen 12.

Die beiden Einzelräder können zusätzlich zu den Verbindungsmitteln unmittelbar miteinander zum Doppelrad verklebt sein.

Eine oder beide Außenverzahnungen zs1, zs2 umfassen vorteilhaft eine Zykloidenverzahnung. Demnach kann die erste Außenverzahnung zs1 und/oder die zweite Außenverzahnung zs2 eine Zykloidenverzahnung umfassen.

Bevorzugt weist das als Zykloidgetriebe 100 ausgeführte Getriebe eine Zykloidenverzahnung zumindest für die erste Außenverzahnung zs1 und für die zweite Außenverzahnung zs2 auf.

Hierdurch können die Verzahnungen der Innenverzahnungen z1, z2 besonders einfach, wie voranstehend beschrieben, mit Nadelrollen 6 ausgeführt sein.

An der zentralen Welle 9 des vorteilhaft als Zykloidgetriebe 100 ausgeführten Getriebes können Gewichte 15 zum dynamischen Ausgleich exzentrisch rotierender Massen angeordnet sein.

Das als Zykloidgetriebe 100 ausgeführte Getriebe kann besonders kompakt hergestellt werden, wenn es nur mit einem exzentrischen Abschnitt 13, auf dem nur ein beispielsweise aus zwei unverdrehbar miteinander verbundenen Einzelrädern zusammengesetztes Rad 11 mit einem ersten Zahnkranz mit der ersten Außenverzahnung zs1 und mit einem zweiten Zahnkranz mit der zweiten Außenverzahnung zs2 ausgeführt ist. Besonders in einer solchen Ausgestaltung liegen exzentrisch rotierende Massen vor, die im Lichte eines anzustrebenden vibrationsfreien Laufs vorteilhaft ausgeglichen werden.

Wichtig ist hervorzuheben, dass die Erfindung verwirklicht sein kann durch ein Getriebe mit einer Zykloidenverzahnung:

- mit einem Körper 1 und einem Innenring 2, zwischen denen ein axialer Trennring 7 angeordnet ist und
- mit einem Lager 3, das den Körper 1 und den Innenring 2 drehbar miteinander verbindet.
- Die Innenverzahnungen z1, z2 umfassen Nadelrollen 6 und Innennuten für die Nadelrollen 6, die mit einer zykloiden Außenverzahnung des als Doppelrad ausgeführten Rads 11 in Eingriff stehen.
- Das Rad 11 befindet sich auf einem an der Welle 9 gebildeten, auch als Exzenterfläche bezeichneten, exzentrischen Abschnitt 13.
- Die Welle 9 ist an beiden Enden der Lager 8 in den Deckeln 4 und 5 angeordnet.
- Die Deckel 4 und 5 sind fest mit dem Körper 1 bzw. Innenring 2 verbunden.

Das Getriebe zeichnet sich beispielsweise dadurch aus, dass die Durchmesser der Kopfkreise und die Durchmesser der manchmal auch als Fersenkreise bezeichneten Fußkreise der beiden Zykloidenverzahnungen am als Doppelrad ausgeführten Rad 11 gleich sind, wobei die Anzahl der Zähne unterschiedlich ist.

Eine Ausgestaltung der Erfindung besteht beispielsweise in Form eines Planetengetriebes mit einer an beiden Enden angeordneten zentralen Welle 9. Die Welle 9 umfasst eine Exzenterfläche mit mindestens einem vorzugsweise als Wälzlager, besonders bevorzugt als Radiallager 10, ausgeführten Lager, auf dem sich ein aus zwei unverdrehbar miteinander verbundenen Einzelrädern zusammengesetztes und daher auch als Doppel-Satellit bezeichnetes Rad 11 befindet. Jedes der Einzelräder des Rads 11 ist mit jeweils einer der beiden Außenverzahnungen zs1, zs2 versehen.

Diese Ausgestaltung des Getriebes ist dadurch gekennzeichnet, dass die Durchme,s-ser der Kopfkreise und die Durchmesser der manchmal auch als Fersenkreise bezeichneten Fußkreise der Verzahnungen auf beiden Einzelrädern des Satelliten gleich sind, wobei die Anzahl der Zähne unterschiedlich ist. Die exzentrisch rotierenden Massen sind mittels an der zentralen Welle 9 befestigten Gewichte 15 dynamisch, ausgeglichen.

Insbesondere kann die Erfindung verwirklicht sein durch ein Getriebe mit einer Zykloidenverzahnung, bestehend aus einem Körper 1, aus einem Innenring 2 zwischen denen ein axialer Trennring 7 angeordnet ist, aus einem Lager 3, das den Körper 1 und den Innenring 2 drehbar miteinander verbindet, die Innennuten, die die Nadelrollen 6 umfassen, die mit einer zykloiden Außenverzahnung des als Doppelrad ausgeführten Rads 11 in Eingriff stehen, das sich auf einer vom exzentrischen Abschnitt 13 umfassten, an der zentralen Welle 9 ausgebildeten Exzenterfläche befindet. Dabei ist die zentrale Welle 9 an beiden Enden der Lager 8 in den Deckeln 4 und 5 angeordnet, die fest mit dem Körper 1 bzw. dem Innenring 2 verbunden sind, wobei die Durchmesser der Kopfkreise und die Durchmesser der manchmal auch als Fersenkreise bezeichneten Fußkreise der beiden Zykloidenverzahnungen am Rad 11 gleich sind, wohingegen die Anzahl der Zähne unterschiedlich ist.

Vorteilhaft kann die Erfindung verwirklicht sein durch ein voranstehend beschriebenes Getriebe mit einer Zykloidenverzahnung, bei dem das als Doppelrad ausgeführte Rad 11 durch Verkleben von zwei Einzelrädern gebildet ist. Die Einzelräder können durch geklebte Stiftverbindungen 12 axial gesichert sein. Vorteilhaft sind die beiden Einzelräder durch geklebte Verbindungsmittel miteinander verbunden, die sowohl mit dem einen als auch mit dem anderen Einzelrad verklebt sind.

Die Erfindung kann darüber hinaus durch ein voranstehend beschriebenes, Getriebe mit einer Zykloidenverzahnung verwirklicht sein. Bei dem Getriebe sind die in den Nuten des Körpers 1 und des Innenrings 2 angeordneten Nadelrollen 6 axial und radial in den Aussparungen der Deckel 4 und 5 gesichert.

Die vorliegende Erfindung zielt darauf ab, ein Präzisionsgetriebe mit:

- kleinen Abmessungen, vorzugsweise mit einem Durchmesser gleich oder kleiner 80 mm,
- einer Hollow-Shaft-Welle mit zentraler Durchgangsöffnung und
- einem weiten Bereich von Übersetzungsverhältnissen herzustellen.

Die ferner beschriebene Lösung beseitigt radiale Platzbeschränkungen in Zykloidengetrieben, indem keine Transformationselemente zwischen den Rädern und dem Austrittsflansch verwendet werden. Hierdurch werden Zykloidengetriebe-Konstruktionen mit kleinen Abmessungen und mit einer zentralen Durchgangsöffnung ermöglicht. Dies erfüllt die Anforderungen an Präzisionsgetriebe mit kleinen Abmessungen, geringem Gewicht und einer relativ großen Öffnung in der Welle. Darüber hinaus ist es möglich, mit einer relativ hohen Belastbarkeit und niedrigen Herstellungskosten einen viel größeren Bereich und einen maximalen Wert der Übersetzungsverhältnisse zu erreichen.

Ein für Präzisionsgetriebekonstruktionen geeignetes Getriebe wird erfindungsgemäß beispielsweise bereitgestellt in Form eines Zykloidgetriebes 100 oder eines Planetengetriebes mit einer zentrale Welle 9, die an beiden Enden in Lagern 8 angeordnet ist. Die zentrale Welle 9 erstreckt sich entlang der Zylinderachse 14 eines hohlzylinderförmigen Grundkörpers 1. Ferner umfasst das Getriebe einen um die Zylinderachse 14 drehbar gegenüber dem Grundkörper 1 gelagerten Ring. Der Ring ist beispielsweise als ein Innenring 2 ausgeführt. Der Innenring 2 ist mittels eines Lagers 3 in dem Grundkörper 1 drehbar um dessen Zylinderachse gelagert.

Am Innenumfang des hohlzylinderförmigen Grundkörpers 1 ist eine erste Innenverzahnung z1 angeordnet. Am Innenumfang des beispielsweise als Innenring 2 ausgeführten Rings ist eine zweite Innenverzahnung z2 angeordnet.

Die zentrale Welle 9 ist sowohl gegenüber dem Grundkörper 1 als auch gegenüber dem beispielsweise als Innenring 2 ausgeführten Ring um die Zylinderachse 14 drehbar gelagert. Die zentrale Welle 9 weist einen exzentrischen Abschnitt 13 auf. Der exzentrische Abschnitt 13 umfasst eine auf der zentralen Welle 9 gebildete exzentrische Lagerfläche, auf der mindestens ein Radiallager 10 angeordnet ist. Auf dem Radial lager 10 ist als Satellitenrad ein Rad 11 mit einer ersten zykloiden Au-βenverzahnung zs1 und mit einer zweiten zykloiden Außenverzahnung zs2 angeordnet. Das Rad 11 kämmt via der ersten zykloiden Außenverzahnung zs1 mit der ersten Innenverzahnung z1 am Innenumfang des Grundkörpers 1. Das Rad 11 kämmt via der zweiten zykloiden Außenverzahnung zs2 mit der zweiten Innenverzahnung z2 am Innenumfang des beispielsweise als Innenring 2 ausgeführten Rings. Das Rad 11 ist als Doppelrad durch Verbinden von zwei in Übereinstimmung ihrer Achsen unverdrehbar miteinander verbundenen und mit jeweils einer der beiden Außenverzahnungen zs1, zs2 versehenen Einzelrädern ausgebildet.

Dieses Getriebe zeichnet sich vorteilhaft dadurch aus, dass die Durchmesser der Kopfkreise und die Durchmesser der manchmal auch als Fersenkreise bezeichneten Fußkreise der Außenverzahnungen zs1, zs2 auf den beiden Einzelrädern des den Satelliten bildenden Rads 11 gleich sind, wobei die Anzahl der Zähne unterschiedlich ist. Insbesondere zeichnet sich dieses Getriebe auch dadurch aus, dass die beiden Einzelräder durch geklebte Verbindungsmittel miteinander verbunden sind. Diese sind sowohl mit dem einen Einzelrad als auch mit dem anderen Einzelrad verklebt.

Die Außenverzahnungen zs1, zs2 des den Satelliten bildenden Rads 11 greifen in die Innenverzahnungen z1, z2 ein. Die Innenverzahnungen z1, z2 sind bevorzugt in Form von Nadelrollen 6 ausgebildet. Die Innenverzahnungen z1, z2 sind in zwei gegeneinander drehbaren Teilen - in dem Grundkörper 1 und in dem beispielsweise als Innenring 2 ausgeführten Ring - angeordnet.

Aufgrund der unterschiedlichen Anzahl von Zähnen der ineinandergreifenden Verzahnungspaarungen:

- erste Außenverzahnung zs1 und erste Innenverzahnung z1.
- zweite Außenverzahnung zs2 und zweite Innenverzahnung z2

kommt es bei einer Drehung der zentralen Welle 9 zur gegenseitigen Winkeldrehung des Grundkörpers 1 und des Innenrings 2 gemäß einem Übersetzungsverhältnis i der kinematischen Anordnung. Die gegenseitige Drehung dieser beiden den Grundkörper 1 und den beispielsweise als Innen ring 2 ausgeführten Ring_umfassenden Teile wird durch das Lager 3 ermöglicht. Das Lager 3 überträgt außer dem Drehmoment alle Kraft- und Momentwirkungen zwischen den beiden Teilen. Gleichzeitig dienen der Grundkörper 1 und der Innenring 2 zur Lagerung der zentralen Welle 9 durch direkte oder - via der Deckel 4, 5 - indirekte Aufnahme der beispielsweise als Wälzlager 8 ausgeführten Lager 8 an ihren beiden Enden. Ferner dienen der Grundkörper 1 und der Innenring 2 zur Befestigung des Getriebes am Rahmen oder am angetriebenen Element, Das Getriebe umfasst ferner Gewichte 15, die gegenüber der exzentrischen Wellenoberfläche entgegen dem exzentrischen Abschnitt 13 an der zentralen Welle 9 befestigt sind und dazu dienen, die exzentrisch rotierenden Massen dynamisch auszugleichen.

Das kinematische Schema des Getriebes ist in Fig.1 dargestellt. Es zeigt einen Grundkörper 1 mit der ersten Innenverzahnung z1 mit einer Anzahl nz1 ihrer Zähne und einen als Innenring 2 ausgeführten Ring mit der zweiten Innenverzahnung z2 mit einer Anzahl nz2 ihrer Zähne. Der Innenring 2 ist im Grundkörper 1 drehbar gelagert. Genauso ist es möglich, dass der Ring beispielsweise in axialer Verlängerung des Grundkörpers 1 an diesem um dessen Zylinderachse 14 drehbar gelagert ist Ferner ist in Fig. 1 die zentrale Welle 9 an ihren beiden Enden im Grundkörper 1 und im Innenring 2 2 drehbar gelagert. Auf der zentralen Welle 9 befindet sich ein exzentrischer Abschnitt 13, auf dem das als ein Doppelsatellit, bestehend aus zwei unverdrehbar miteinander verbundenen Einzelrädern, ausgeführte Rad 11 drehbar gelagert ist. Jedes der zwei in Übereinstimmung ihrer Achsen unverdrehbar miteinander verbundenen Einzelräder ist mit jeweils einer der beiden Außenverzahnungen zs1, zs2 versehen.

Die erste Außenverzahnung zs1 des den Satelliten bildenden Rads 11 mit einer Anzahl nzs1 ihrer Zähne greift in die erste Innenverzahnung z1 am Innenumfang des Grundkörpers 1 ein. Die zweite Außenverzahnung zs2 mit einer Anzahl nzs2 ihrer Zähne greift in die zweite Innenverzahnung z2 am Innenumfang des als Innenring 2 ausgeführten Rings ein. In einer solchen kinematischen Anordnung ist das Übersetzungsverhältnis

$$i = 1/(1- (nzs2/nz2)*(nz1/nzs1)).$$

Wenn der Wert von i positiv ist, sind die Drehrichtungen der zentralen Welle 9 und des beispielsweise als Innenring 2 ausgeführten Rings gleich. Wenn der Wert von i negativ ist, sind die Drehrichtungen der zentralen Welle 9 und des beispielsweise als Innenring 2 ausgeführten Rings entgegengesetzt.

Ausführungsbeispiele eines als Zykloidgetriebe 100 ausgeführten Getriebes sind weiter unter Bezugnahme auf Fig. 2, Fig. 3, Fig. 4, Fig. 5, Fig. 6 und Fig. 7 ausführlicher beschrieben.

Das Getriebe ist in Fig. 2 in einem Längsschnitt und in Fig. 7 in einer der axonometrischen Ansicht gezeigt. Das Getriebe besteht aus einem Grundkörper 1 und einem Innenring 2, die über ein Lager 3 drehbar miteinander verbunden sind. Das Lager 3 ist dadurch gekennzeichnet, dass es außer dem Drehmoment alle Kraft- und Momentwirkungen zwischen dem Grundkörper 1 und dem Innenring 2 überträgt. Jede der angeführten Teile Grundkörper 1 und Innenring 2 hat Öffnungen, mittels welcher diese an einem Rahmen oder an einem angetriebenen Element befestigen werden können. Das Getriebe besteht ferner aus einem zur besseren Unterscheidung als Eintrittsdeckel bezeichneten Deckel 4 und einem als Austrittsdeckel bezeichneten Deckel 5, die eine ähnliche bzw. identische Form haben können. Der Deckel 4 ist mittels Schrauben am Grundkörper 1 und der Deckel 5 am Innenring 2 befestigt. Der Grundkörper 1 und der Innenring 2 umfassen Nuten, in denen Nadelrollen 6 gelagert sind, die die erste Innenverzahnung z1 am Grundkörper 1 und die zweite Innenverzahnung z2 am Innenring 2 bilden. Um eine gegenseitige Interaktion zwischen den Nadelrollen 6 der verschiedenen Innenverzahnungen z1, z2 zu verhindern, sind diese durch einen axialen Trennring 7 getrennt, der zwischen dem Grundkörper 1 und dem Innenring 2 eingesetzt ist. Die Nadelrollen 6 können in Aussparungen der Deckel 4 und 5 axial und radial gesichert sein. Die Deckel 4 und 5 umfassen bevorzugt Laufflächen für die Wälzlagerelemente der Lager 8, in denen die zentrale Welle 9 an ihren beiden Enden angeordnet ist. Auf dem exzentrischen Abschnitt 13 der zentralen Welle 9 ist mindestens eine Lauffläche ausgebildet, auf der sich Radiallager 10 befinden. Auf den Radiallagern 10 ist ein als ein doppeltes Satellitenrad ausgeführtes Rad 11 angeordnet, das durch Verbinden zweier Einzelräder mit jeweils einer zykloidenförmigen Außenverzahnung gebildet ist. Dabei ist ein erstes Einzelrad des Rads 11 mit der ersten Außenverzahnung zs1 versehen. Ein zweites Einzelrad des Rads 11 ist mit der zweiten Außenverzahnung zs2 versehen.

Die beiden Einzelräder sind durch geklebte Verbindungsmittel miteinander verbunden. Die geklebten Verbindungsmittel sind sowohl mit dem einen Einzelrad als auch mit dem anderen Einzelrad verklebt.

Das Getriebe zeichnet sich bevorzugt dadurch aus, dass die Durchmesser der Kopfkreise und die Durchmesser der manchmal auch als Fersenkreise bezeichneten Fußkreise der Verzahnungen auf beiden Rädern gleich sind, wobei die Anzahl der Zähne unterschiedlich ist.

Auf der Welle 9 sind Gewichte 15 angeordnet, die zum dynamischen Ausgleich der exzentrisch rotierenden Massen dienen. Stifte 16 dienen einer Fixierung der Gewichte 15 in einer Drehlage gegenüber der exzentrischen Wellenoberfläche entgegen dem exzentrischen Abschnitt 13 an der zentralen Welle 9.

Die Erfindung ist beispielsweise im Bereich der Automatisierungstechnik gewerblich anwendbar, insbesondere in der Robotertechnologie und auf dem Gebiet des Maschinenbaus.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

Bezugszeichenliste

| 1 | Grundkörper |
|---|---|
| 2 | Innenring |
| 3 | Lager |
| 4 | Deckel (Grundkörper) |
| 5 | Deckel (Ring) |

6 Nadelrolle
7 Trennring
3 Lager
9 zentrale Welle
10 Radiallager
11 Rad
12 Stiftverbindung
13 exzentrischer Abschnitt
14 Zylinderachse
15 Gewicht
16 Stift
17 Ring
18 Ring

z1 erste Innenverzahnung
z2 zweite Innenverzahnung

zs1 erste Außenverzahnung
zs2 zweite Außenverzahnung

100 Zykloidgetriebe

**Patentansprüche**

1. Zykloidgetriebe (100), umfassend:

   - einen hohlzylinderförmigen Grundkörper (1) mit einer ersten Innenverzahnung (z1),
   - einen um die Zylinderachse (14) des Grundkörpers (1) drehbar angeordneten hohlzylinderförmigen Ring (2) mit einer zweiten Innenverzahnung (z2),
   - eine sich entlang der Zylinderachse (14) erstreckende und um diese drehbar angeordnete zentrale Welle (9) mit einem exzentrischen Abschnitt (13), und
   - ein drehbar auf dem exzentrischen Abschnitt (13) angeordnetes Rad (11) mit einer ersten Außenverzahnung (zs1), via welcher es mit der ersten Innenverzahnung (z1) des Grundkörpers (1) kämmt, und mit einer zweiten Außenverzahnung (zs2), via welcher es mit der zweiten Innenverzahnung (z2) des hohlzylinderförmigen Rings kämmt,
   wobei das Rad (11) als ein Doppelrad ausgeführt ist, umfassend zwei in Übereinstimmung ihrer Achsen unverdrehbar miteinander verbundene und mit jeweils einer der beiden Außenverzahnungen (zs1, zs2) versehene Einzelräder, **dadurch gekennzeichnet,** dass die Einzelräder durch geklebte Verbindungsmittel miteinander verbunden sind, die sowohl mit dem einen, als auch mit dem anderen Einzelrad verklebt sind.

2. Zykloidgetriebe nach Anspruch 1, **dadurch gekennzeichnet,**

dass die Verbindungsmittel geklebte Stiftverbindungen (12) umfassen, durch welche die zwei Einzelräder axial gesichert sind.

3. Zykloidgetriebe nach Anspruch 2, **dadurch gekennzeichnet,** dass die geklebten Stiftverbindungen (12) durch axiale Durchgangslöcher in einem der zwei Einzelräder in axiale Sacklöcher im verbleibenden Einzelrad der zwei Einzelräder reichen.

4. Zykloidgetriebe nach Anspruch 2 oder 3, **dadurch gekennzeichnet,** dass die geklebten Stiftverbindungen (12) in an den Einzelrädern stirnseitig gegenüberliegend angeordneten Sacklöchern angeordnet sind.

5. Zykloidgetriebe nach einem der voranstehenden Ansprüche, **dadurch gekennzeichnet,** dass die Verbindungsmittel mindestens einen geklebten Ring (17, 18) umfassen, durch welchen die zwei Einzelräder axial gesichert sind.

6. Zykloidgetriebe nach Anspruch 5, **dadurch gekennzeichnet,** dass der Ring (17) in an den Einzelrädern stirnseitig gegenüberliegend angeordneten Nuten eingeklebt ist.

7. Zykloidgetriebe nach Anspruch 5 oder 6, **dadurch gekennzeichnet,** dass der Ring (18) an dem dem exzentrischen Abschnitt (13) zugewandten Innenumfang der Einzelräder an diese geklebt ist.

8. Zykloidgetriebe nach einem der voranstehenden Ansprüche, **dadurch gekennzeichnet,** dass die Durchmesser der Kopfkreise und die Durchmesser der Fußkreise der beiden Außenverzahnungen (zs1, zs2) am Rad (11) gleich sind, wobei die Anzahl der Zähne unterschiedlich ist.

9. Zykloidgetriebe nach einem der voranstehenden Ansprüche, **dadurch gekennzeichnet,** dass die zentrale Welle (9) hohl ausgeführt ist.

10. Zykloidgetriebe nach einem der voranstehenden Ansprüche, **dadurch gekennzeichnet,** dass der hohlzylinderförmige Ring als ein im Grundkörper (1) drehbar gelagert angeordneter Innenring (2) ausgeführt ist.

11. Zykloidgetriebe nach einem der voranstehenden Ansprüche,

**dadurch gekennzeichnet,**
**dass** zwischen dem hohlzylinderförmigen Ring (2) und dem Grundkörper (1) ein axialer Trennring (7) angeordnet ist.

12. Zykloidgetriebe nach einem der voranstehenden Ansprüche,
**dadurch gekennzeichnet,**
**dass** eine oder beide Innenverzahnungen ($z1$, $z2$) Nadelrollen (6) umfassen.

13. Zykloidgetriebe nach einem der voranstehenden Ansprüche,
**dadurch gekennzeichnet,**
**dass** ein Deckel (4) unverdrehbar mit dem Grundkörper (1) verbunden ist, an oder in welchem Deckel (4) die zentrale Welle (9) drehbar gelagert ist.

14. Zykloidgetriebe nach einem der voranstehenden Ansprüche,
**dadurch gekennzeichnet,**
**dass** ein Deckel (5) unverdrehbar mit dem hohlzylinderförmigen Ring verbunden ist, an oder in welchem Deckel (5) die zentrale Welle (9) drehbar gelagert ist.

15. Zykloidgetriebe nach einem der voranstehenden Ansprüche,
**dadurch gekennzeichnet,**
**dass** eine oder beide Außenverzahnungen ($zs1$, $zs2$) eine Zykloidenverzahnung umfasst.

16. Zykloidgetriebe nach einem der voranstehenden Ansprüche,
**dadurch gekennzeichnet,**
**dass** an der zentralen Welle (9) Gewichte (15) zum dynamischen Ausgleich exzentrisch rotierender Massen angeordnet sind.

17. Zykloidgetriebe nach den Ansprüchen 13 und 14,
**dadurch gekennzeichnet,**
**dass** die Nadelrollen (6) in Nuten des Grundkörpers (1) und des hohlzylinderförmigen Rings (2) angeordnet sind und vermittels in den beiden Deckeln (4) und (5) ausgebildeten Aussparungen axial und radial gesichert sind.

**Claims**

1. Cycloidal transmission (100), comprising:

   - a hollow cylindrical base body (1) with a first internal toothing ($z1$),
   - a hollow cylindrical ring (2) arranged rotatably about the cylinder axis (14) of the base body (1) and having a second internal toothing ($z2$),
   - a central shaft (9) extending along and rotatable about the cylinder axis (14) and having an eccentric portion (13), and
   - a wheel (11) rotatably mounted on the eccentric portion (13) and having a first external toothing ($zs1$) via which it meshes with the first internal toothing ($z1$) of the base body (1) and a second external toothing ($zs2$) via which it meshes with the second internal toothing ($z2$) of the hollow cylindrical ring,
   wherein the wheel (11) is designed as a double wheel comprising two individual wheels non-rotatably connected to each other in correspondence of their axes and each provided with one of the two external toothings ($zs1$, $zs2$), **characterized in**,
   **in that** the individual wheels are connected to each other by bonded connecting means which are bonded to both one and the other individual wheel.

2. Cycloidal transmission according to claim 1,
**characterized in that**
that the connecting means comprise bonded pin connections (12) by which the two individual wheels are axially secured.

3. Cycloidal transmission according to claim 2,
**characterized in that**
**in that** the bonded pin connections (12) extend through axial through-holes in one of the two individual wheels into axial blind holes in the remaining individual wheel of the two individual wheels.

4. Cycloidal transmission according to claim 2 or 3,
**characterized in that**
**in that** the bonded pin connections (12) are arranged in blind holes arranged opposite one another on the end faces of the individual wheels.

5. Cycloidal transmission according to any of the preceding claims,
**characterized in that**
that the connecting means comprise at least one bonded ring (17, 18) by which the two individual wheels are axially secured.

6. Cycloidal transmission according to claim 5,
**characterized in that**
**in that** the ring (17) is glued into grooves arranged opposite each other on the faces of the individual wheels.

7. Cycloidal transmission according to claim 5 or 6,
**characterized in that**
that the ring (18) is glued to the inner circumference of the individual wheels facing the eccentric section (13).

8. Cycloidal transmission according to any of the preceding claims,
   **characterized in that**
   **in that** the diameters of the tip circles and the diameters of the root circles of the two external toothings (zs1, zs2) on the wheel (11) are the same, the number of teeth being different.

9. Cycloidal transmission according to any of the preceding claims,
   **characterized in that**
   that the central shaft (9) is hollow.

10. Cycloidal transmission according to any of the preceding claims,
    **characterized in that**
    **in that** the hollow cylindrical ring is designed as an inner ring (2) rotatably mounted in the base body (1).

11. Cycloidal transmission according to any of the preceding claims,
    **characterized in that**
    **in that** an axial separating ring (7) is arranged between the hollow cylindrical ring (2) and the base body (1).

12. Cycloidal transmission according to any of the preceding claims,
    **characterized in that**
    **in that** one or both internal toothings (z1, z2) comprise needle rollers (6).

13. Cycloidal transmission according to any of the preceding claims,
    **characterized in that**
    that a cover (4) is non-rotatably connected to the base body (1), on or in which cover (4) the central shaft (9) is rotatably mounted.

14. Cycloidal transmission according to any of the preceding claims,
    **characterized in that**
    that a cover (5) is non-rotatably connected to the hollow cylindrical ring, on or in which cover (5) the central shaft (9) is rotatably mounted.

15. Cycloidal transmission according to any of the preceding claims,
    **characterized in that**
    **in that** one or both external toothings (zs1, zs2) comprise cycloidal toothing.

16. Cycloidal transmission according to any of the preceding claims,
    **characterized in that**
    **in that** weights (15) are arranged on the central shaft (9) for dynamic compensation of eccentrically rotating masses.

17. Cycloidal transmission according to claims 13 and 14,
    **characterized in that**
    that the needle rollers (6) are arranged in grooves of the base body (1) and the hollow cylindrical ring (2) and are axially and radially secured by means of recesses formed in the two covers (4) and (5).

## Revendications

1. Réducteurs planétaires à excentriques (100) se composant de:

   - Un corps de base en forme de cylindre creux (1) avec une première denture intérieure (z1),
   - Un anneau en forme de cylindre creux (2) disposé à titre rotatif autour de l'axe du cylindre (14) du corps de base (1) avec une deuxième denture intérieure (z2),
   - Une vague centrale (9) disposée et s'étendant tout au long de l'axe de cylindre (14) avec une section excentrique (13) et
   - Une roue (11) disposée à titre rotatif sur la section excentrique (13) avec une première denture extérieure (zs1) par le biais de laquelle on engrène avec la première denture intérieure (z1) du corps de base (1) et avec une deuxième denture extérieure (zs2) par le biais de laquelle on engrène avec la deuxième denture intérieure (z2) de l'anneau en forme de cylindre creux ;
   - Où la roue (11) est exécutée en qualité de roues jumelées se composant de deux roues indépendantes munies en harmonie de leurs axes de manière non rotatif reliées entre elles et respectivement par de deux dentures extérieures (zs1, zs2) sont caractérisés de sorte que les roues indépendantes sont reliées entre elles par le biais de moyens de liaison cimentés qui sont cimentés aussi bien avec l'une qu'avec l'autre roue indépendante.

2. Réducteurs planétaires à excentriques selon la revendication 1 sont caractérisés de sorte que les moyens de liaison se composent de connexions de broche cimentées (12) qui sauvegardent les deux roues indépendantes axialement.

3. Réducteurs planétaires à excentriques selon la revendication 2 sont caractérisés de sorte que les connexions de broche cimentées (12) s'étendent par le biais de trous débouchants axialement jusqu'à une roue indépendante restante des deux roues indépendantes dans des trous borgnes axiales.

4. Réducteurs planétaires à excentriques selon la revendication 2 ou 3 sont caractérisés de sorte que les connexions de broche cimentées (12) sont disposées dans les trous borgnes disposés sur le côté frontale et à titre opposé sur les roues indépendantes.

5. Réducteurs planétaires à excentriques selon les revendications précédentes sont caractérisés de sorte que les moyens de liaison se composent au minimum d'un anneau cimenté (17,18) à travers duquel sont protégés deux roues indépendantes axialement.

6. Réducteurs planétaires à excentriques selon la revendication 5 sont caractérisés de sorte que l'anneau (17) est cimenté aux encoches disposées sur le côté frontale et à titre opposé sur les roues indépendantes.

7. Réducteurs planétaires à excentriques selon la revendication 5 ou 6 sont caractérisés de sorte que l'anneau (18) est cimenté aux roues indépendantes à la section excentrique (13) à la circonférence intérieure.

8. Réducteurs planétaires à excentriques selon les revendications précédentes sont caractérisés de sorte que les diamètres des entraxes et les diamètres des chevilles des deux dentures extérieures (zs1, zs2) sont équivaut au niveau de la roue (11) où le nombre des dentures est variable.

9. Réducteurs planétaires à excentriques selon les revendications précédentes sont caractérisés de sorte que la vague centrale (9) est exécuté à titre vide.

10. Réducteurs planétaires à excentriques selon les revendications précédentes sont caractérisés de sorte que l'anneau en forme de cylindre creux est exécuté en qualité d'anneau intérieure (2) monté à titre rotatif et disposé au niveau du corps de base (1).

11. Réducteurs planétaires à excentriques selon les revendications précédentes sont caractérisés de sorte qu'une bague sectionnée axiale (7) est disposée entre l'anneau en forme de cylindre creux (2) et le corps de base (1).

12. Réducteurs planétaires à excentriques selon les revendications précédentes sont caractérisés de sorte qu'une denture intérieure ou le cas échéant deux dentures intérieures (z1, z2) se composent de rouleaux à aiguilles.

13. Réducteurs planétaires à excentriques selon les revendications précédentes sont caractérisés de sorte qu'un bouchon (4) est relié de manière à ne pas tourner au corps de base (1) dans le dit bouchon (4) la vague centrale (9) est montée à titre rotatif.

14. Réducteurs planétaires à excentriques selon les revendications précédentes sont caractérisés de sorte qu'un bouchon (5) est relié de manière à ne pas tourner à l'anneau en forme de cylindre creux dans le dit bouchon (4) la vague centrale (9) est montée à titre rotatif.

15. Réducteurs planétaires à excentriques selon les revendications précédentes sont caractérisés de sorte qu'une ou le cas échéant deux dentures extérieures (zs1, zs2) se compose ou se composent d'une denture cycloïdale.

16. Réducteurs planétaires à excentriques selon les revendications précédentes sont caractérisés de sorte que des masses (15) sont disposées au niveau de la vague centrale (9) en vue de l'équilibre dynamique des masses à rotation excentrique.

17. Réducteurs planétaires à excentriques selon la revendication 13 ou 14 sont caractérisés de sorte que les rouleaux à aiguilles (6) sont disposés dans les encoches du corps de base (1) et de l'anneau en forme de cylindre creux (2) et sont protégés au moyen de deux couvercles (4) et de découpes formées (5) axialement et radialement.

100

Fig. 1

Fig. 2

Fig. 3

12

Fig. 4

Fig. 5

18

Fig. 6

100

5  2  3  8  15  9  10  12

16  15  8  11  6  7  1  4

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2020122582 A
- JP H01169154 A
- EP 2255104 A1
- US 2004083850 A1
- US 10352400 B2
- JP 2014035030 A
- BE 495812
- US 4584904 A
- DE 19542024 A1
- DE 112017000935 T5